# EUROPEAN PATENT APPLICATION

(11) **EP 4 112 511 A1**
(43) Date of publication of application: **04.01.2023**
(21) Application number: 21216622.7
(22) Date of filing: 14.05.2015
(51) Int. Cl.: B65G 47/72, B65G 47/78, B65G 27/12, B65G 27/16

(54) **IN-LINE ADJUSTABLE GATE**

(62) Divisional of application: 15707239.8
(71) Applicant: Svejkovsky, Karen Sue, Rockwall, TX 75032 (US)
(72) Inventor: SVEJKOVSKY, P. Blake, Coppell, 75019 (US)
(74) Representative: HGF

(57) **Abstract**

A conveyor run (20) for moving goods to two or more destinations can be used to move a first fraction of the goods to a first destination and a second fraction of the goods to another destination. A differential impulse driver (24) coupled to a conveyor portion is reversible to enable the conveyor run to move goods in either direction along the conveyor run. An adjustable gate (10) includes a rotatable sleeve (16) with an opening (19) that is positionable relative to conveyor portions (31; 22; 30) between which the adjustable gate is connected. The rotatable sleeve (16) rotates relative to the adjacent conveyor portions to position the opening (19) to set the fraction of the goods that pass from an upstream conveyor portion to the downstream conveyor portion and to set the fraction of the goods that drop from the conveyor run through the opening.

## Description

### Statement of Related -Application

This application depends from and claims priority to US Patent Application No. 14/186,656 filed on February 21, 2014.

### Field of the Invention

The present invention relates to an adjustable conveyor gate, for use in a conveyor run, that can be adjusted to pass all, none or a selected fraction of a stream of goods received into the gate from a conveyor first portion to a conveyor second portion, All, none or a selected fraction of the stream of goods may be dropped from the conveyor run through the adjustable gate and to a separate conveyor run or other receiving structure.

### Background of the Related Art

Various types of conveyor gates have been devised for controllably moving a stream of goods through the gate, in a closed position, or for moving a stream of goods from a conveyor run using the gate, in an open position, so that the goods drop from a conveyor run including the gate to a lower conveyor run or to a storage member. Gates for conventional conveyor systems commonly include a slide mechanism that opens and closes an opening in the gate. These conventional, gates can damage fragile goods when the gate is moved from the open to the closed position. Additionally, powered slide mechanisms used to operate conventional gates present a safety hazard because a closing gate may capture a finger or an article of clothing worn by an equipment operator working near the gate.

An improved rotatable gate for a conveyor system is disclosed in U.S. Patent 6,378,688. Goods moving along a conveyor run ride on the lowermost portion of a trough in which the goods move, A rotatable sleeve of the gate disclosed in the '688 Patent includes an opening along a portion of its circumference such that, when the opening is in an elevated position, goods moved along a conveyor run that includes the adjustable gate will pass through the rotatable sleeve and are dropped from an adjacent end of the adjustable gate to a structure there below. But when the opening of the rotatable sleeve is rotated to a lowered position, all or some of the lowermost portion of the trough in which the goods move is absent, and all or some of the goods moving along the conveyor run enter the rotatable sleeve and drop through the opening and from the adjustable gate to a receiving structure below, such as a bagging machine or a lower conveyor run that moves the goods to a desired destination. Goods remaining on the conveyor run that includes the gate, i.e. any goods that move past the opening in the rotatable sleeve of the gate, will be discharged off of the end of the gate to a receiving structure below.

The gate disclosed in the '688 Patent has limitations, however, in that the gate "drops" the goods either through the opening in the rotatable sleeve or off the end of the gate. Either way, the goods are dropped very near to the adjustable gate. For certain types of conveyors, elevating goods to a higher position is difficult - goods can be moved only horizontally along the conveyor run or downwardly from the conveyor run. A shortcoming of the gate of the '688 Patent is that goods can be dropped from the end of the gate, for example, to a lower receiving conveyor run, or goods can be dropped through the opening in the rotatable sleeve of the gate, for example, to a lower receivable conveyor run, but the conveyor run or other receiving structure underneath the end of the adjustable gate is necessarily very close to the conveyor run or other receiving structure underneath the adjustable gate. This may result in unwanted crowding of the process area underneath the adjustable gate.

The adjustable gate of the prior art has shortcomings. For example, it may be desirable to move the goods that do not fall through the opening in the adjustable gate further from the goods that drop directly underneath the adjustable gate, Also, the loss of elevation of the goods that drop from the rotatable sleeve of the adjustable gate or moving through the rotatable sleeve of the adjustable gate to drop off the end of the gate, along with the unwanted crowding underneath the gate, limits the flexibility of the conveyor system that includes the conveyor run with the adjustable gate for moving goods to multiple desired destinations,

Another shortcoming of the gate of the '688 Patent is that it is unidirectional; that is, it can only be used at an end of a conveyor portion. The gate of the '688 Patent is not capable of moving goods that are not dropped from the adjustable gate in either direction through the gate. As a result. single-direction conveyor runs further limit the flexibility of the conveyor system.

These and other disadvantages of the prior art are overcome by the present invention.

### SUMMARY OF THE INVENTION

One embodiment of the present invention provides an adjustable gate securable within a conveyor run and between a conveyor first portion and a conveyor second portion of the conveyor run. In a first mode, the conveyor first portion is disposed on an upstream side of the adjustable gate and moves the goods to and into the adjustable gate. If a rotatable sleeve within the gate is in the closed, or partially closed, position, a second conveyor portion disposed on a downstream side of the gate will receive and the goods, or some of the goods, and continue to move them along the second conveyor portion disposed on the downstream side of the adjustable gate.

The rotatable sleeve of the adjustable gate is rotatable to selectively position an opening in the rotatable sleeve at an elevated position to remove it from the path of the goods moving through the gate, or the opening in the rotatable sleeve may be rotated to a lowered position that is in the path of the goods so that some or all of the goods that enter the gate from a conveyor portion on an upstream side of the adjustable gate will fall through the opening in the rotatable sleeve of the adjustable gate and drop to another structure such as, for example, a receiving conveyor run positioned underneath the adjustable gate or some other receiving structure. The rotatable sleeve of the adjustable gate of the present invention is rotatable relative to the first and second conveyor portions that straddle the adjustable gate, and relative to a cage in which the rotatable sleeve is rotably received. The cage of adjustable gate is secured a tray flange at a first end to the discharge end of an upstream conveyor portion and using a tray flange at the second end to the inlet end of a downstream conveyor portion, It will be understood that the terms "discharge end" and "inlet end," as used herein, are terms that indicate the direction of movement of the goods to and through the gate, and these terms change if the direction of movement of the goods along the conveyor run in which the adjustable gate is installed is reversed.

The cage of the adjustable gate is sufficiently rigid and sturdy to withstand the vertical forces, the cyclically varying horizontal forces and the cyclically varying bending moments imparted to the cage by the upstream and downstream conveyor portions connected to the adjustable gate, and by operation of the differential impulse drive or other vibratory-type system that is coupled to one or to the other of the upstream and downstream conveyor portions. The opening of the rotatable sleeve of the adjustable gate of the present invention spans a substantial portion of a circumference of the rotatable sleeve. The angular position of the opening about an axis of the cage may be varied to selectively drop a variable fraction of the goods entering the gate from and adjacent portion of the conveyor run. When the opening is rotated to its lowermost position relative to the cage, all of the goods entering the adjustable gate will be dropped through the opening and from the conveyor run that includes the adjustable gate.

These and further features and advantages of the present invention will become apparent from the following detailed description, wherein reference is made to the appended drawings.

### BRIEF DESCRIPTION OF THE DRAWINGS

FIG. **1** is a perspective view of an embodiment of a conveyor run of the present invention having two adjustable gates and a reversible differential impulse drive.
FIG. **2** is an enlarged view of one of the adjustable gates of FIG. **1** with the rotatable sleeve drive motor removed to reveal details of the adjustable gate.
FIG. **3** is a perspective view of the embodiment of the leftmost adjustable gate of FIG. **1****.**
FIG. **4** is a perspective view of the rotatable sleeve of the adjustable gate of FIG. **3****.**
FIG. **5** is a partial cross-sectional view of a portion of the adjustable gate and a wear shoe.
FIG. **6** is a partial cross-sectional view of a portion of the adjustable gate showing the relationship of the rotatable sleeve, an adjacent wear shoe and a seal.
FIG. **7** is an enlarged partial cross-sectional, view of a portion of an embodiment of the adjustable gate after a plunger assembly is coupled to the rotatable sleeve.
FIG. **8** is an enlarged and sectional view of the spring-biased plunger assembly of FIG. **7** removed from the rotatable sleeve for clarity.
FIG. **9** depicts another embodiment of a conveyor system, with a conveyor portion separated from an adjacent conveyor portion by first (rightmost) adjustable gate, and with conveyor portion separated from an adjacent conveyor portion by second (leftmost) adjustable gate.
FIG. **10** depicts another embodiment of the conveyor system, with a single source conveyor feeding conveyor run.

### DETAILED DESCRIPTION OF PREFERRED EMBODIMENTS

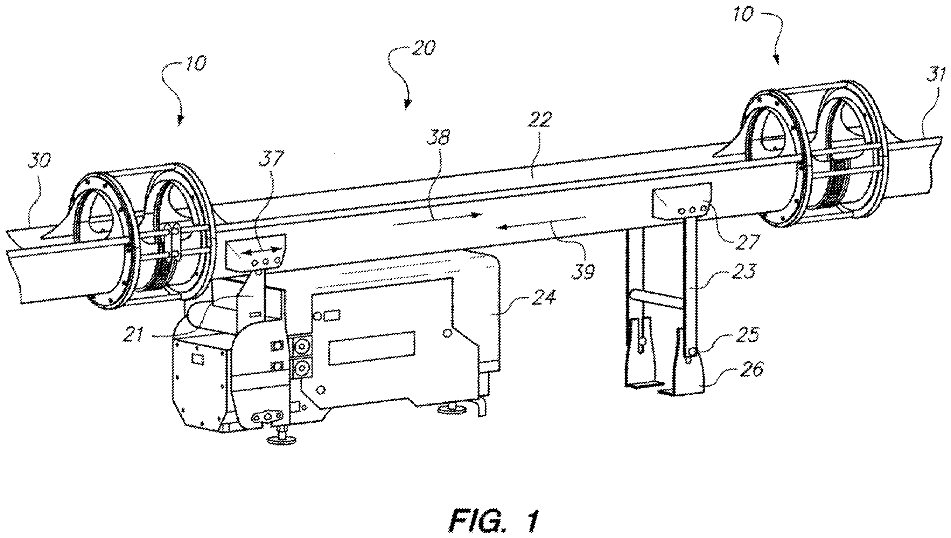

FIG. **1** depicts an embodiment of a conveyor run **20** comprising an elongate tray **22** forming a trough which may have a generally semi-circular cross-section to move a stream of goods therein (not shown) along the generally linear path of the tray **22.** The tray **22** is driven to reciprocate lengthwise by a differential impulse driver **24** that includes a motor (not shown) and a mechanism for converting the output of the motor to a reciprocatrng motion as indicated by the arrow **37**. Support leg **23** is pivotally coupled to base **26** at pivot **25** and pivotally coupled to the tray **22** at leg coupling **27**. A driver link **21** connects the differential impulse driver **24** to the tray **22** at a drive coupling **24.**

The differential impulse driver **24** reciprocates the driver link **21** and the tray **22** connected thereto as indicated by the double-headed arrow **37**. It will be understood that leg **23** merely pivotally supports the tray **22** and passively "follows" the tray **22** as it reciprocates as driven by the differential impulse driver **24.** It will be understood that large embodiments of conveyor runs **20** including adjustable gates **10** could be moved by two or more differential impulse drivers **24** that are synchronized to cooperate in moving goods along the conveyor run **20.**

In one mode of operation, the differential impulse driver **24** moves goods along the tray **22** in the direction indicated by the arrow **38** by moving the tray **22** slowly in the direction indicated by the arrow **38** and then more rapidly in the reversed direction indicated by the arrow **39.** The acceleration of the tray **22** from its leftmost position and in the direction indicated by arrow **38** is sufficiently slow so that the goods supported on the tray **22** move along with the tray **22** due to friction between the goods and the tray **22,** but the acceleration of the tray **22** from the rightmost position and in the direction indicated by the arrow **39** is sufficiently great relative to the previous acceleration of the tray **22** in the direction indicated by the arrow **38** so as to cause the goods to slide along the tray **22** because the friction between the goods and the tray **22** is insufficient to prevent the goods from sliding along the tray **22.** The net displacement of the goods resulting from this cyclic reciprocation of the tray **22** in this manner will be in the direction indicated by the arrow **38,** and such movement of the goods along the tray **22** will be at a generally steady and predictable rate of movement with very little damage to the goods as compared to other conveyor types.

In one embodiment, the displacement of the tray **22** from the leftmost position and in the direction indicated by the arrow **38,** and also from the rightmost position and in the reversed direction indicated by the arrow **39,** is within the range from 0.25 inches to 3.0 inches. The displacement imparted to the tray **22** by the differential impulse driver **24** can be adjusted to optimize performance of the conveyor run **20** with the specific goods to be moved along the conveyor run **20.**

It will be understood that the differential impulse driver **24** may be reversed to move the tray **22** from the leftmost position at a great rate of acceleration and in the direction indicated by the arrow **38** to cause the goods to slide along the tray **22,** and then to move the tray **22** from the rightmost position and at a lower rate of acceleration to cause the goods to move with the tray **22** and in the direction indicated by the arrow **39.** This reversed mode of operation of the conveyor run **20** will move goods along the tray **22** in the direction indicated by the arrow **39**.

Adjustable gates **10** are provided within the conveyor run **20** of FIG. **1** to provide the option of controllably splitting a stream of goods received at the adjustable gate **10** on the conveyor run **20** into two or more separated streams of goods that can be separately distributed using, for example, other conveyor runs, to a variety of stations and/or processes within a goods processing plant and at which the separated stream of goods may be treated, seasoned, conditioned, packaged, etc. The configuration of the conveyor run **20** with adjustable gates **10** in the position illustrated in FIG. **1** will result in simple pass-through of goods; that is, the adjustable gates **10** in the conveyor run **20** illustrated in FIG. **1** are in a closed position (openings in the adjustable gates are in an elevated position) to prevent separation of a stream of goods that enter either of the adjustable gates **10.** As will be explained below in more detail, one or both of the adjustable gates **10** in the conveyor run **20** of FIG. 1 may be selectively adjusted to separate a stream of goods entering the adjustable gate **10**. As presently configured, however, the conveyor run **20** of FIG. **1** will move a stream of goods from a first end **30,** through the closed adjustable gates **10** and off the second end **31** of the conveyor run **20** if the differential impulse driver **24** is operated to move goods on the tray **22** in the direction indicated by arrow **38.** If the differential impulse driver **24** is operated to move the goods on the tray **22** in the direction indicated by arrow **39,** the conveyor run **20** will move a stream of goods from the second end **31,** through the closed adjustable gates **10** and off the first end **30.**

While the tray **22** illustrated in FIG. **1** is generally semi-circular in shape, an alternate embodiment of the tray **22** could have a relatively flat and horizontal bottom with generally linear tray sides projecting upwardly at an obtuse angle to the bottom, much like the profile of an inverted isosceles trapezoid. A tray **22** having an inverted isosceles trapezoid cross-section may include a transition to a semi-circuiar cross-section positioned immediately adjacent to each end of an adjustable gate **10.** The semi-circruar tray is the preferred configuration as it self-centers the product or goods moving through the conveyor run **20** to allow the next gate to drop and/or pass the correct proportion of the incoming product.

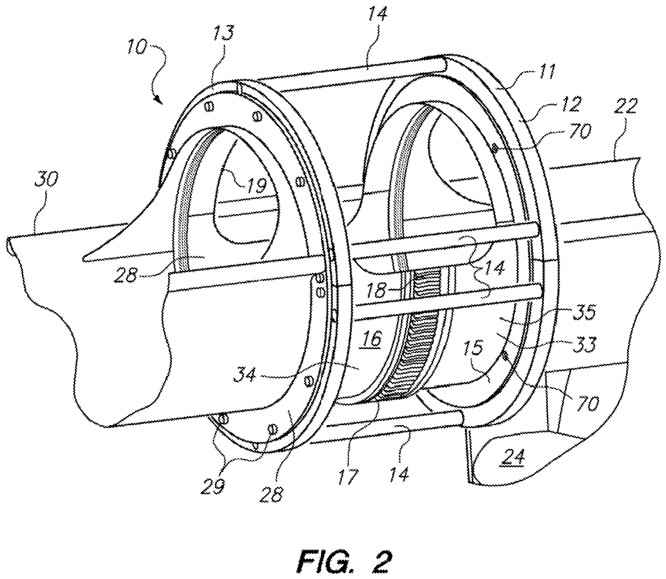

FIG. **2** is an enlarged view of the leftmost of the adjustable gates **10** of the conveyor run **20** of FIG. **1** with the drive motor removed to reveal structural details of the adjustable gate. The adjustable gate **10** of FIG. **2** comprises a cage **11** having a first end flange **12,** a second end flange **13** and a plurality of circumferenrialiy-spaced braces **14** connected therebetween. A conveyor portion **30** is connected at a flange coupling **15** to the second end flange **13** of the adjustable gate **10.** The tray **22** is similarly connected at a flange coupling **15** to the first end flange **12.**

The braces **14** of the adjustable gate **10** are connected between the first end flange **12** and the second end flange **13** of the cage **11.** The braces **14** are together sufficiently robust to transfer large and cyclically-reversing loads imparted to the tray **22** coupled to the first end flange **12** of the cage **11,** to the cage **11** itself, and to the conveyor portion **30** coupled to the second end flange **13** of the cage **11.** More specifically, the braces **14** transfer loads imparted by the differential impulse driver **24,** to the tray **22** through the first end flange **12** of the cage **11,** through the braces **14,** and to the second end flange **13** of the cage **11** to the conveyor portion **30,** It will be understood that the load transferred by the braces **14** of the cage **11** of the adjustable gate **10** may generally include a cyclic compression-aiternating-tension load directed generally along the braces **14** as a result of the reciprocation of the conveyor run **20** using the differential impulse driver **24.** The loading may further include a cycling bending moment attributable to the centroid of the weight of the conveyor portions, for example, conveyor portion **30** and tray **22,** located to the left and to the right of the adjustable gate **10,** respectively, being below a center axis through the first end flange **12** and second end flange **13.**

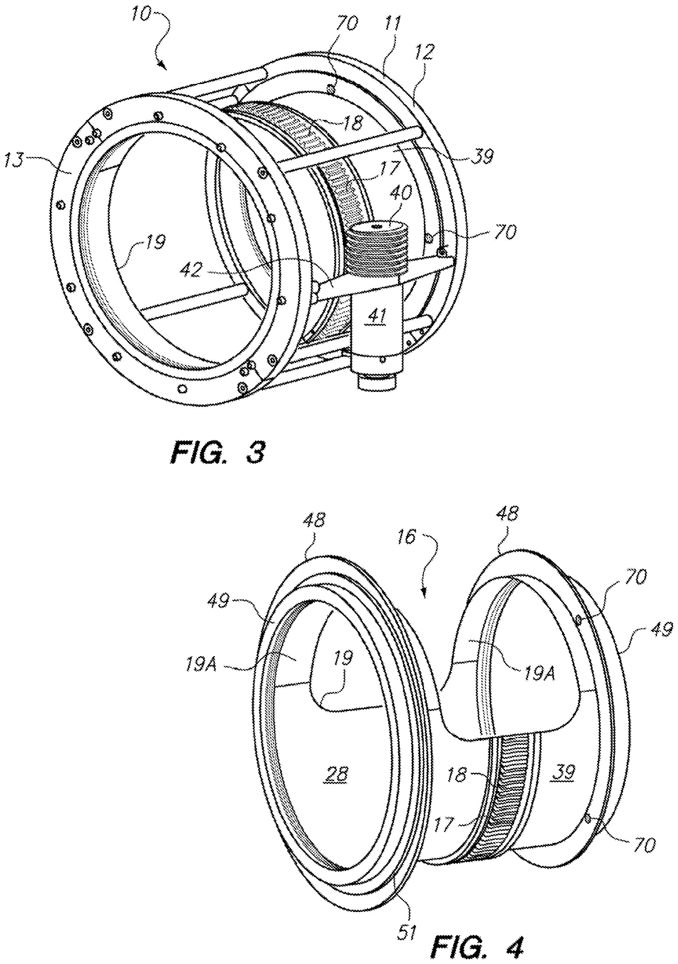

FIG. **2** illustrates a rotatable sleeve **16** movably received within the cage **11.** The rotatable sleeve **16** of FIG. **2** is slidably coupled at first end **33** of the rotatable sleeve **16** to the first end flange **12** of the cage **11** and at a second end **34** of the rotatable sleeve **16** to the second end flange **13** of the cage **11.** A gear **17,** having a plurality of gear teeth **18,** is wrapped along a curved outer surface **35** of the rotatable sleeve **16.** The rotatable sleeve **16** comprises an opening **19.** The rotatable sleeve **16** is rotatable about a center axis (not shown) using a motor (not shown in FIG. **2** - see FIG. **3****)** to position the opening **19** between an elevated position, illustrated in FIG. **2****,** and a lowered position illustrated in FIG. **3****,** In one embodiment of the adjustable gate **10,** the motor (not shown in **FIG. 2****)** is reversible. The gear **17** extends only about a portion of the curved outer surface **35** of the rotatable sleeve **16** so as to leave the opening **19** unobstructed. It will be understood that the gear **17** may be described as a segment of a spur gear.

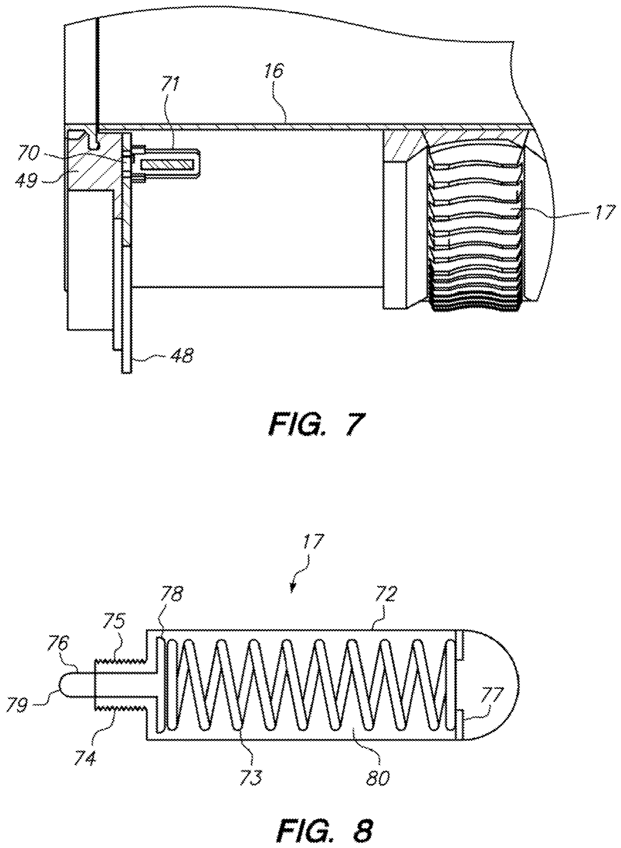

FIG. **2** reveals a tray flange **28** connected to the second end flange **13** of the cage **11** of the adjustable gate **10** using conventional fasteners **29.** The tray flange **28** couples the conveyor portion **30** to the left of the adjustable gate **10** in FIG. **2** to the cage **11** of the adjustable gate **10.** It will be understood that a similar tray flange **28** is disposed on the right side of the adjustable gate **10** in FIG. **2** to couple the tray **22** to the first end flange **12** of the cage **11** of the adjustable gate **11.** FIG. **2** further reveals the rightmost positioning ring **15** of the rotatable sleeve **16** of the adjustable gate **10.** The leftmost positioning ring **15** of the rotatable sleeve **16** of the adjustable flange **10** is hidden from view in FIG. **2****.** Each positioning ring **15** rotates within the cage **11** of the adjustable gate **10** along with the rotatable sleeve **16.** The positioning ring **15** visible in FIG. **2** includes threaded apertures **70.** These threaded apertures **70** are used to couple spring-biased plunger assemblies **71** (not shown in FIG. **2** **-** see FIG. **8****)** to the positioning rings **15** on the rotatable sleeve **16** of an adjustable gate **10,** as will be discussed in more detail in connection with FIG. **8****.**

FIG. **3** is a perspective view of the embodiment of the adjustable gate **10** of FIG. **2** decoupled from the conveyor portion **30** and the tray **22** and with a motor **41** and a drive gear **40** operably coupled to controllably position the rotatable sleeve **16** within the cage **11** of the adjustable gate **10.** The motor **41** is coupled to a motor support **42** that is, in turn, coupled intermediate the first end flange **12** and the second end flange **13** of the cage **11** of the adjustable gate **10.** The drive gear **40,** which is a worm gear, is rotatable by the motor **41** to slidably engage teeth **18** of the gear **17** and to move the gear **17** on the rotatable sleeve **16** either upwardly along the drive gear **40** or downwardly along the drive gear **40,** depending on the direction of rotation of the drive gear **40** by the motor **41**.

The adjustable gates **10** illustrated in FIGs. **1** and **2** show the rotatable sleeve **16** with the opening **19** in an elevated position so that all goods entering the adjustable gate **10** will pass through the rotatable sleeve **16** regardless of the direction of movement of the goods along the conveyor run **20**. FIG. **3** shows the rotatable sleeve **16** with the opening **19** lowered by operation of the motor **41** so that goods entering the adjustable gate **10** will drop through the lowered opening **19** and from the adjustable gate **10** to a directly receiving conveyor so that no goods pass through the adjustable gate **10.** It will be understood that the motor **41** of FIG. **3** can be controllably operated to position the opening **19** of the rotatable sleeve **16** of the adjustable gate **10** between these two extreme positions illustrated in FIG. **2** (elevated) and FIG. **3** (lowered) so that some of the goods are dropped from the adjustable gate **10** and some of the goods pass through the adjustable gate **10.**

FIG. **4** is a perspective view of the rotatable sleeve **16** of the adjustable gate **10** of FIG. **3** disposed intermediate a pair of wear shoes **49.** Each wear shoe **49** has a flange **51** that engages the positioning ring **48** of the rotatable sleeve **16.** The wear shoes **49** reside within the cage **11** of the adjustable gate **10** along with the rotatable sleeve **16** to engage and position the positioning rings **48** of the rotatable sleeve **16** as it cyclically accelerates and decelerates within the cage **11** (see FIG. **3****).** The wear shoes **49** cooperate with plunger assemblies **71,** which are discussed in more detail in connection with FIG. **8****.** FIG. **4** reveals the structures that seal with, position and movably couple the rotatable sleeve **16** within the cage **11.** FIG. **4** reveals the positioning rings **48** extending radially outwardly from the rotatable sleeve **16**, each positioning ring **48** having threaded apertures **70** for coupling spring-biased plunger assemblies **71.** In the assembled state illustrated in FIG. **3**, the rightmost positioning ring **48** (not shown in FIG. **3** - see FIG. **4****)** of the rotatable sleeve **16** is received into a corresponding interior groove (not shown) within a bore of the first end flange **12** (not shown in FIG. **4** - see FIG. **3****)** of the cage **11** and the leftmost positioning ring **48** (not shown in FIG. **3** - see FIG. **4****)** is received into a corresponding interior groove (not shown) within a bore of the second end flange **13** (not shown in FIG. **4** **-** see FIG. **3****)** of the cage **11.** As can be seen in FIG. **3****,** the first end flange **12** and the second end flange **13** are each constructed by combining two semi-circular halves and coupling the halves together to form the fully circular first and second end flanges **12** and **13.** This arrangement is akin to a clamshell structure that receives the positioning rings **48** within interior grooves within the end flanges **12** and **13** of the cage **11,** The positioning rings **48** of the rotatable sleeve **16** illustrated in FIG. 4 radially engage and slide within the corresponding interior grooves of the cage **11,** and axially engage and rotate against the wear shoes **49** captured within the cage **11** along with the rotatable sleeve **16.** The wear shoes **49** and the cage **11** cooperate to maintain the rotatable sleeve **16** in a desired position within the cage **11** while allowing the opening **19** to be selectively positioned by operation of the motor **41.**

It will be understood that the cyclic acceleration and deceleration imparted to the adjustable gates **10** through the tray **22** (see FIG. **1**) would impart a recurring slapping or lashing effect to the rotatable sleeve **16** disposed within the cage **11** of the adjustable gate 1**0** without mechanical features provided to minimize the damage resulting from such rigorous motion. The wear shoes **49** function as very (axially) short journal, bearings that intermittently engage and bear against the rotatable sleeve **16** within the bores of the first end flange **12** and the second end flange **13** of the cage **11.** When the motor **41** is operated, the rotatable sleeve **16** is rotated within the cage **11** of the adjustable gate **10** to elevate or to lower the opening **19,** If the opening **19** is positioned as illustrated in FIG. **3****,** goods moving from, for example, the tray **22** into the rotatable sleeve **16** of the adjustable gate **10** will fall through the opening **19** to a receiving structure such as, for example, a receiving conveyor portion or other process structure there below. When the rotatable sleeve **16** is rotated within the cage **11** of the adjustable gate **10** to elevate the opening **19,** as illustrated in FIGs. **1****,** **2** and **4****,** goods entering the adjustable gate **10** will pass through the rotatable sleeve **16** and through the wear shoes 49 that straddle the rotatable sleeve **16.** The adjustable gate **10** opening **19** may be positioned at a number of positions intermediate the lowered and elevated positions illustrated in FIGs. **2** and **3** so that a cotirrollably selected fraction of the goods that enter the adjustable gate **10** will pass through the rotatable sleeve **16** of the adjustable gate **10** and remain on the conveyor run while the remainder of the goods will pass through the opening **19** of the adjustable gate **10** and be dropped from the conveyor run **20** that includes the adjustable gate **10,**

Foodstuffs are among the types of goods that can be moved and transported using embodiments of the conveyor run and embodiments of the gate of the present invention. By then nature, foodstuffs such as, for example, potato chips and other prepared foods, are seasoned, salted or produce crumbs as a result of being handled and moved. It is advantageous if embodiments of the gate of the present invention are constructed to move this type of goods through the gate, or into the gate and through the opening of the rotatable sleeve, with minimal breakage of the goods and in a manner that prevents fouling of the moving parts of the gate by broken crumbs, seasoning, salt, etc. that may find their way into crevices, gaps, seams and recesses in the gate itself or in the interfaces at the ends of the gate where the gate meets with conveyor portions that can be used to move goods into the gate or to receive goods moving from the gate.

One embodiment of the gate of the present: invention includes structures to isolate the surfaces of the rotatable sleeve **16** on which goods are supported and moved and to prevent unwanted materials from escaping the goods-supporting surfaces or from fouling the interfaces between moving and non-moving components of the gate.

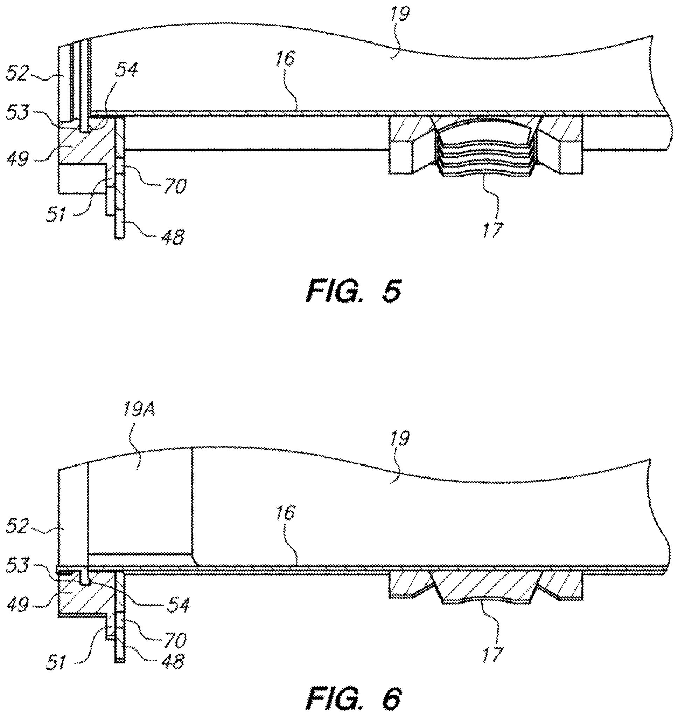

FIG. **5** is an enlarged partial cross-sectional view of a portion of an embodiment of the adjustable gate **10.** The position of the rotatable sleeve **16** in FIG. **5** corresponds to the opening **19** being in the elevated position as illustrated in FIG. **4** and reveals the sealing structures between the rotatable sleeve **16** and the wear shoe **49** disposed adjacent thereto. FIG. **5** also shows the gear **17** of the rotatable sleeve **16** and the leftmost positioning ring **48** of the rotatable sleeve **16** disposed adjacent to the wear shoe **49.** The wear shoe **49** includes a seal groove **54** into which a seal extension **53** is received.

FIG. **6** is an enlarged partial cross-sectional view of a portion of an embodiment of the adjustable gate **10.** The position of the rotatable sleeve **16** in FIG. **6** corresponds to the opening **19** being in the lowered position as illustrated in FIG. **3** and reveals the sealing structures between the rotatable sleeve **16** and the wear shoe **49.** The rotatable sleeve **16** includes the opening **19** and the adjacent opening periphery **19A** (also shown in FIG. **4**), FIG. **6** also shows the gear **17** of the rotatable sleeve **16** and the leftmost positioning ring **48** of the rotatable sleeve **16** disposed adjacent to the wear shoe **49.** The wear shoe **49** includes a radially-ontwardly extending portion **51** to increase the area of engagement between the wear shoe **49** and the positioning ring **48.** The threaded aperture **70** in the positioning ring **48** of the rotatable sleeve **16** is shows in FIG. **5**. This threaded aperture **70** is discussed in more detail below and in connection with FIG. **8****.**

Wear shoes **49** bear the axial loading of the rotatable sleeve **16** of the adjustable gate **10** that results from the adjustable gate **10** being cyclically moved back and forth by the differential impulse driver **24** shown in **FIG. 1****,** It will be understood that cyclical forces imparted by the differential impulse driver **24** through a conveyor portion proximal to the adjustable gate **10** are transferred to the rotatable sleeve **16** and to the abutting wear shoes **49** through spring-biased plunger assemblies **71** (see FIG. 7).

FIG. **7** is an enlarged partial cross-sectional view of a portion of an embodiment of the adjustable gate **10** after a plunger assembly **71** is coupled to the rotatable sleeve **16.** The plunger assembly **71** is coupled to the rotatable sleeve **16** intermediate the rotatable sleeve **16** and the wear shoe **49** disposed adjacent to the positioning ring **48** of the rotatable sleeve **16.** In one embodiment of the adjustable gate **10** of the present, invention, a plunger assembly **71** is coupled to the positioning ring **48** at the left side of the adjustable gate **10** and another spring-biased plunger assembly **71** is coupled to the opposite, right side of the adjustable gate **10** to provide controlled movement of the rotatable sleeve **16** of the adjustable gate **10** relative to the straddling wear shoes **49** on either side of the rotatable sleeve **16.**

FIG. **8** is an enlarged and sectional view of the spring-biased plunger assembly **71** of FIG. **7** removed from the rotatable sleeve **16** for clarity. The plunger assembly **71** comprises a body **72** having an interior chamber **80** to receive a coil spring **73** therein. The coil spring **73** is captured in a slightly compressed configuration intermediate the stop **77** near the end of the chamber **80** and a plunger tip **76**. The body **72** includes a connector **74** having a diameter and threads **75** that correspond to the diameter and threads within the threaded aperture **70** in the positioning rings **48** (see FIGs. **2** - **4****,** **5** and **6**). The plunger tip **76** includes a base **78** that engages the coil spring **73** and a wear-resistant nose **79** that engages the wear shoe **49** as shown in FIG. **7****.**

It will be understood that the rotation of the rotatable sleeve **16** within the cage **11** requires at least some clearance between the rotatable sleeve **16** and the straddling wear shoes **49**. The amount of clearance may be, for example, 20 to 30 thousands of an inch, The clearance between the surface of the wear shoe **49** and the adjacent positioning ring **48** of the rotatable sleeve **16**, along with the thickness of the positioning ring **48** and the mass of the rotatable sleeve **16,** are among the factors that can be considered in the design of the plunger assembly **71**. It will be further understood that, as the plunger assembly **71** is threadably installed into the threaded apertures **70** of the positioning rings **48** of the rotatable sleeve **16**, the coil spring **73** will begin to be compressed at the time that the nose **79** of the plunger tip **76** engages the wear shoe **49** and, as the plunger assembly **71** is threaded into the aperture **70,** the coil spring **73** will be loaded. The plunger assemblies **71** will maintain the position of the rotatable sleeve **16** between the straddling wear shoes **49** and will store and return kinetic energy imparted to the rotatable sleeve **16** by operation of the differential, impulse driver **24.** The plunger assemblies **71** will protect the rotatable sleeve **16** against the damaging effects of recurring cyclic slap that would otherwise damage the rotatable sleeve **16**.

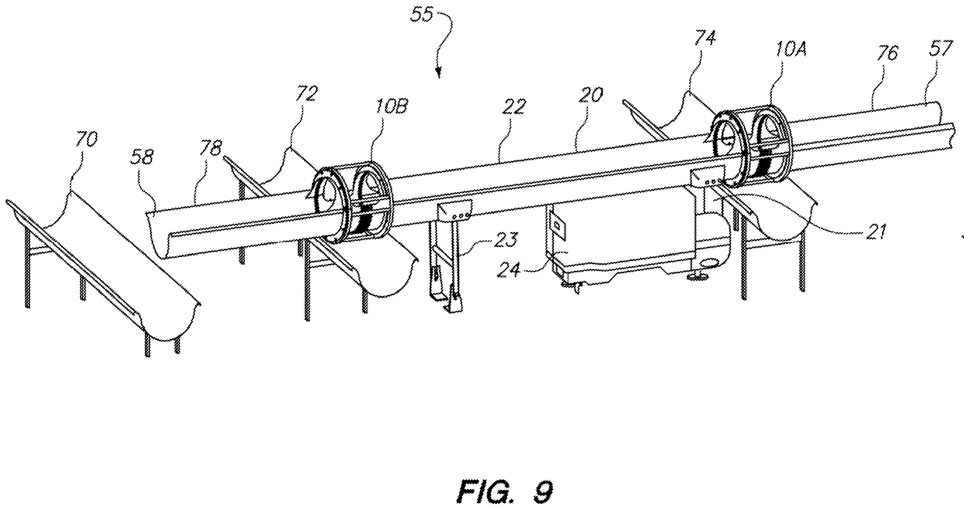

FIG. **9** depicts another embodiment of a conveyor system **55,** with a conveyor portion **76** separated from an adjacent conveyor portion **22** by first (rightmost) adjustable gate **10A**, and with conveyor portion **22** separated from an adjacent conveyor portion **78** by second (leftmost) adjustable gate **10B**. A receiving conveyor **74** is positioned to receive goods dropped from the first adjustable gate **10A**, and another receiving conveyor **72** is positioned to receive goods dropped from the second adjustable gate **10B**. Another receiving conveyor portion **70** is positioned to receive goods that move from right to left and that are not dropped from either of the adjustable gates **10A** and **10B**.

Conveyor portion **76,** the first adjustable gate **10A**, conveyor portion **22,** the second adjustable gate **10B** and conveyor portion **78** all combined make up conveyor run **20**. Receiving conveyor **74,** receiving conveyor **72** and receiving conveyor **70** may, in certain configurations of the adjustable gates **10A** and **10B** receive goods received onto the conveyor run **20** at the receiving end **57**. Goods routed to receiving conveyor **70** are discharged from dropping end **58** of the conveyor run **20.** It will be understood that the terms "receiving end **57"** and "dropping end **58**" are direction dependent terms, and indicate that the differential impulse driver **24** is configured to move goods from right to left along the conveyor run **20**. If the differential impulse driver **24** is reversed to move goods from the left to the right along the conveyor run **20**, the terms would be reversed to indicate a receiving end **58** and a dropping end **57.** It will also be understood that the source conveyor is not shown in FIG. **9** for clarity, but a source conveyor providing goods to be moved on the conveyor system **55** of FIG. **9** would drop the goods onto one of conveyor portion **76**, conveyor portion **22** and conveyor portion **78**. It will be further understood that two source conveyors may be used to drop goods to be moved on the conveyor system **55.** For example, source conveyors could drop goods onto all three of conveyor portion **76**, conveyor portion **22** and conveyor portion **78** if the differential impulse driver **24** is configured to move goods from right to left in FIG **9**. Source conveyors could also drop goods onto conveyor portion **76,** conveyor portion **22** and conveyor portion **78** if the differential impulse driver **24** is configured to move goods from left to right in FIG. **9****,** depending on what is provided to the right of what would, with that configuration of the differential impulse driver **24**, be dropping end **57.** The conveyor system **55** of FIG. **9** provides a highly versatile system for distributing one or more source streams of goods to multiple locations, with adjustable gates **10A** and **10B** providing a large amount of the flexibility.

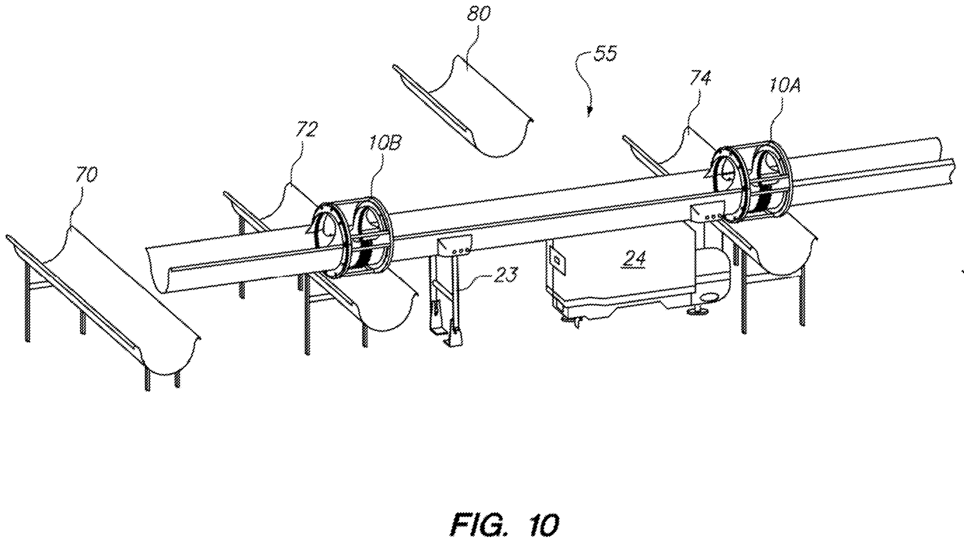

FIG. **10** depicts another embodiment of the conveyor system **55,** with a single source conveyor **80** feeding conveyor run **20**. It will be understood that the goods moved by the source conveyor **80** can be routed, using the conveyor system **55,** to a single destination accessible through the conveyor run **20** and one of the receiving conveyors **70**, **72,** and **74**. Alternately, the goods moved by the source conveyor **80** can be separated, using one of the adjustable gates **10A** and **10B**, into two or more streams, each comprising a portion of the stream of goods deposited from the source conveyor **80** onto the conveyor run **20,** and routed to two or more destinations accessible through receiving conveyors **70, 72,** and **74** or through other receiving conveyors off to the right of the conveyor system **55** shown in FIG. **9****,** It will be understood that, just as the adjustable gates **10A** and **10B** can be manipulated to reroute the goods received onto the conveyor run **20**, the differential impulse drive **24** also be manipulated (reversed) to reroute goods received on conveyor run **20**. It will be further understood that while receiving conveyors **70, 72** and **74** are shown without differential impulse drivers **24,** these conveyor runs may also be equipped with differential impulse drivers **24** and pivoting support legs **23** to add more options for the distribution of goods at a process site.

Although specific embodiments of the invention have been described herein in some detail, this has been done solely for the purposes of explaining the various aspects of the invention, and is not intended to limit the scope of the invention as defined in the claims which follow. Those skilled in the art will understand that the embodiment shown and described is exemplary, and various other substitutions, alterations and modifications, including but not limited to those design alternatives specifically discussed herein, may be made in the practice of the invention without departing from its scope.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, components and/or groups, but do not preclude the presence or addition of one or more other features, integers, steps, operations, elements, components, and/or groups thereof. The terms "preferably," "preferred," "prefer," "optionally," "may," and similar terms are used to indicate that an item, condition or step being referred to is an optional (not required) feature of the invention.

The corresponding structures, materials, acts, and equivalents of all means or steps plus function elements in the claims below are intended to include any structure, material, or act for performing the function in combination with other claimed elements as specifically claimed. The description of the present invention has been presented for purposes of illustration and description, but it is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiments with various modifications as are suited to the particular use contemplated.

### THE FOLLOWING STATEMENTS

### DESCRIBE VARIOUS EMBODIMENTS OF THE INVENTION

1. An adjustable gate connectable between a conveyor first portion and a conveyor second portion of a conveyor run, the adjustable gate comprising:
   a cage having a first end flange connectable to the first conveyor portion of a conveyor run, and having a second end flange, opposite the first end flange, connectable to the second conveyor portion of the conveyor run;
   a rotatable sleeve having a circumference and an opening along a portion of its circumference, a first end movably coupled to the first arid flange of the cage, a second end movably coupled to a second end flange of the cage to provide for rotation of the rotatable sleeve within the cage, and a gear having a plurality of teeth provided along an outer surface of the rotatable sleeve adjacent to the opening;
   a first spring-biased plunger assembly disposed intermediate the rotatable sleeve and the conveyor first portion:
      a second spring-biased plunger assembly disposed intermediate the rotatable sleeve and the conveyor second portion and
      a motor connected to at least one of the cage, the conveyor first portion and the conveyor second portion and operable to rotate a drive gear engaged with the gear of the rotatable sleeve.
2. The adjustable gate of statement 1, wherein the rotatable sleeve further comprises:
   a first end positioning ring extending radially outwardly from the rotatable sleeve at a first end and movably received within a corresponding groove within the first end flange of the cage; and
   a second end positioning ring extending radially outwardly from the rotatable sleeve at a second end and movably received within a corresponding groove within the second end flange of the cage;
   wherein the first spring-biased plunger assembly is coupled to the first end positioning ring; and
   the second spring-biased plunger assembly is coupled to the second end positioning ring.
3. The adjustable gate of statement 1, wherein the motor is a servo motor and the drive gear is a worm gear that engages at least one tooth of the plurality of teeth of the gear on the rotatable sleeve.
4. A conveyor run, comprising:
   a conveyor first portion having an end adapted for coupling to an adjustable gate;
   a conveyor second portion having an end adapted for coupling to an adjustable gate;
   an adjustable gate connected between the ends of the conveyor first portion and the conveyor second portion and including:
      a cage having a first end flange connectable to the end of the conveyor first portion, and having a second end flange, opposite the first end flange, connectable to the conveyor second portion;
      a rotatable sleeve having a circumference and an opening along a portion of the circumference, a first end movably coupled to the first end flange of the cage, a second end movably coupled to a second end flange of the cage, and a gear with a plurality of teeth along an outer surface of the rotatable sleeve and circumferentially adjacent to the opening;
      a first spring -biased plunger assembly disposed intermediate the rotatable sleeve and the conveyor first portion
      a second spring-biased plunger assembly disposed intermediate the rotatable sleeve and the conveyor second portion
      a motor connected to at least one of the cage, the conveyor first portion and the conveyor second portion and operable to rotate a drive gear engaged with the gear of the rotatable sleeve to enable selective positioning of the opening between an elevated position relative to the cage and a lowered position relative to the cage; and
      a differential impulse driver coupled to at least one of the conveyor first portion and the conveyor second portion to reciprocate the conveyor run with unequal accelerations in a first direction and a second direction opposite to the first direction to move goods along the conveyor first portion and into the adjustable gate.
5. The conveyor run of statement 4, wherein operation of the differential impulse driver moves goods deposited one of the conveyor first portion and the conveyor second portion into the rotatable sleeve of the adjustable gate; and
   wherein goods entering the rotatable sleeve from the one of the conveyor first portion and the conveyor second portion when the opening is in the lowered position are dropped from the conveyor run;
   wherein goods entering the rotatable sleeve from the one of the conveyor first portion and conveyor second portion when the opening is in the elevated position are retained on the conveyor run and move through the adjustable gate to the other of the conveyor first portion and the conveyor second portion and
   wherein goods entering the rotatable gate member from the one of the conveyor first portion and conveyor second portion when the opening is in a position intermediate the lowered position and the elevated position are separated into a first fraction that is retained on the conveyor run and move through the adjustable gate to the other of the conveyor first portion and conveyor second portion and a second fraction that is dropped from the conveyor run throug h the opening in the rotatable sleeve.
6. The adjustable gate of statement 4, wherein the differential impulse driver is selectively operable to cyclically move the conveyor run in a first direction, opposite to the direction of movement of the goods, and at a first acceleration sufficient to cause goods to slip along a goods-supporting surface of the conveyor run, and then in a second direction, that is the same as the direction of movement of goods, and at a second acceleration that is less than the first acceleration and that is generally insufficient to cause the goods to slip along the goods-supporting surface of the conveyor run;
   wherein the cyclic movement of the conveyor run in this manner results in a generally steady movement of goods along the first portion of the conveyor run and into the adjustable gate; and
   wherein the first fraction of the goods that are moved into the adjustable gate by operation of the differential impulse driver and that move through the adjustable gate onto the second portion of the conveyor run is determined by the position of the opening in the rotatable sleeve of the adjustable gate
7. The adjustable gate of statement 4, wherein the cage of the adjustable gate includes a plurality of circumferentially-spaced load members connected at a first end to a first end flange and at a second end to a second end flange;
   wherein a cyclically variable force applied to a first conveyor portion connected to the first end flange is transferred through the load members to the second conveyor portion.
8. The adjustable gate of statement 4, wherein the differential impulse driver is reversible to drive goods in a reverse direction to move goods on the second conveyor portion to the adjustable gate; and
   wherein the reversed differential impulse motor cyclically moves the conveyor run in the first direction, opposite to the direction of movement of the goods, and at a slow rate of movement that is insufficient to cause the goods to slip along a goods-supporting surface of the conveyor run, and then in the second direction that is opposite the direction of movement of goods at a rapid rate of movement that is sufficient to cause the goods to slip along the goods-supporting surface of the conveyor run;
   wherein the cyclic movement of the conveyor run in this manner results in a generally steady movement of goods along the se cond portion of the conveyor run and into the adjustable gate; and
   a fraction of the goods that are moved into the adjustable gate by operation of the differential impulse motor and that move through the adjustable gate onto the upstream portion of the conveyor run is determined by the position of the discharge opening in the rotatable sleeve of the adjustable gate
9. The adjustable gate of statement I, further comprising:
   a second adjustable gate disposed within the conveyor run downstream from the first adjustable gate and secured within the downstream portion of the conveyor run; and
   a second downstream portion of the conveyor run downstream from and secured to the second rotatable sleeve.
10. The adjustable gate of statement 1, further comprising:
   a flange secured to the first portion of the tray;
   the rotatable flange secured to the rotatable sleeve; and
   a plurality of securing members for connecting the tray flange and the rotatable flange.
11. A adjustable gate for being coupled between a conveyor first portion and a conveyor second portion, comprising;
   a cage having a first end flange and a second end flange and a plurality of load-transferring braces coupled therebetween;
   a rotatable sleeve movably received within the cage to rotate about an axis of the cage and having a discharge opening along a portion of its circumference for selectively dropping goods from the rotatable sleeve;
   a motor coupled to drive a worm gear to rotate the rotatable sleeve about the axis of the cage
   a first spring-biased plunger assembly disposed intermediate the rotatable sleeve and the conveyor first portion and
   a second spring-biased plunger assembly disposed intermediate the rotatable sleeve and the conveyor second portion.

## Claims

1. An adjustable gate securable within a conveyor run and between a conveyor first portion and a conveyor second portion of the conveyor run, wherein:
in a first mode, the conveyor first portion is disposed on an upstream side of the adjustable gate and moves the goods to and into the adjustable gate;
if a rotatable sleeve within the gate is in the closed, or partially closed, position, a second conveyor portion disposed on a downstream side of the gate will receive the goods, or some of the goods, and continue to move them along the second conveyor portion disposed on the downstream side of the adjustable gate.

2. An adjustable gate as claimed in claim 1, wherein the rotatable sleeve is rotatable to selectively position an opening in the rotatable sleeve at an elevated position to remove it from the path of the goods moving through the gate.

3. An adjustable gate as claimed in claim 1 or claim 2, wherein the rotatable sleeve is rotatable to selectively position an opening in the rotatable sleeve to a lowered position that is in the path of the goods so that some or all of the goods that enter the gate from a conveyor portion on an upstream side of the adjustable gate will fall through the opening in the rotatable sleeve.

4. An adjustable gate as claimed in claim 3, wherein the goods that fall through the opening drop to another structure.

5. An adjustable gate as claimed in claim 4, wherein the goods that fall through the opening drop to a receiving conveyor run positioned underneath the adjustable gate.

6. An adjustable gate as claimed in claim 5, wherein the rotatable sleeve is rotatable relative to the first and second conveyor portions that straddle the adjustable gate, and relative to a cage in which the rotatable sleeve is rotatably received.

7. An adjustable gate as claimed in claim 6, wherein the cage is secured to a tray flange at a first end to the discharge end of an upstream conveyor portion and using a tray flange at the second end to the inlet end of a downstream conveyor portion.

8. An adjustable gate as claimed in claim 6 or claim 7, wherein the angular position of the opening about an axis of die cage may be varied to selectively drop a variable fraction of the goods entering the gate from an adjacent portion of the conveyor run.

9. An adjustable gate as claimed in claim 8, wherein when the opening is rotated to its lowermost position relative to the cage, all of the goods entering the adjustable gate will be dropped through the opening and from the conveyor run that includes the adjustable gate.

10. A conveyor run, comprising:
a conveyor first portion having an end adapted for coupling to an adjustable gate;
a conveyor second portion having an end adapted for coupling to an adjustable gate;
an adjustable gate connected between the ends of the conveyor first portion and the conveyor second portion and including:
a cage having a first end flange collectable to the end of the conveyor first portion, and having a second end flange, opposite the first end flange, connectable to the conveyor second portion;
a rotatable sleeve having a circumference and an opening along a portion of the circumference, a first end movably coupled to the first end flange of the cage, a second end movably coupled to a second end flange of the cage, and a gear with a plurality of teeth along an outer surface of the rotatable sleeve and circumferentially adjacent to the opening:
a first spring-biased plunger assembly disposed, intermediate the rotatable sleeve and the conveyer first portion;
a second spring-biased plunger assembly disposed intermediate the rotatable sleeve and the conveyor second portion;
a motor connected to at least one of the cage, the conveyor first portion and the conveyor second portion and operable to rotate a drive gear engaged with the gear of the rotatable sleeve to enable selective positioning of the opening between an elevated position relative to the cage and a lowered position relative to the cage; and
a differential impulse driver coupled to at least one of the conveyor first portion and the conveyor second portion to reciprocate the conveyor run with unequal accelerations in a first direction and a second direction opposite to the first direction to move goods along the conveyor first portion and into the adjustable gate.

11. The conveyor run of claim 10, wherein operation of the differential impulse driver moves goods deposited one of the conveyor first portion and the conveyor second portion into the rotatable sleeve of the adjustable gate; and
wherein goods entering the rotatable sleeve from the one of the conveyor first portion and the conveyor second portion when the opening is in the lowered position are dropped from the conveyor run;
wherein goods entering the rotatable sleeve from the one of the conveyor first portion and conveyor second portion when the opening is in the elevated position are retained on the conveyor run and move through the adjustable gate to the other of the conveyor first portion and the conveyor second portion; and
wherein goods entering the rotatable gate member from the one of the conveyor first portion and conveyor second portion when the opening is in a position intermediate the lowered position and the elevated position are separated into a first fraction that is retained on the conveyor run and move through the adjustable gate to the other of the conveyor first portion and conveyor second portion and a second fraction that is dropped from the conveyor run through the opening in the rotatable sleeve.

12. The adjustable gate of claim 10, wherein the differential impulse driver is selectively operable to cyclically move the conveyor run in a first direction, opposite to the direction of movement of the goods, and at a first acceleration sufficient to cause goods to slip along a goods-supporting surface of the conveyor run, and then in a second direction, that is the same as the direction of movement of goods, and at a second acceleration that is less than the first acceleration and that is generally insufficient to cause the goods to slip along the goods-supporting surface of the conveyor run;
wherein the cyclic movement of the conveyor run in this manner results in a generally steady movement of goods along the first portion of the conveyor run and into the adjustable gate; and
wherein the first fraction of the goods that are moved into the adjustable gate by operation of the differential impulse driver and that move through the adjustable gate onto the second portion of the conveyor run is determined by the position of the opening in the rotatable sleeve of the adjustable gate.

13. The adjustable gate of claim 10, wherein the cage of the adjustable gate includes a plurality of circumferentially-spaced load members connected at a first end to a first end flange and at a second end to a second end flange;
wherein a cyclically variable force applied to a first conveyor portion connected to the first end flange is transferred through the load members to the second conveyor portion.

14. The adjustable gate of claim 10, wherein the differential impulse driver is reversible to drive goods in a reverse direction to move goods on the second conveyor portion to the adjustable gate; and
wherein the reversed differential impulse motor cyclically moves the conveyor run in the first direction, opposite to the direction of movement of the goods, and at a slow rate of movement that is insufficient to cause the goods to slip along a goods-supporting surface of the conveyor run, and then in the second direction that is opposite the direction of movement of goods at a rapid rate of movement that is sufficient to cause the goods to slip along the goods-supporting surface of the conveyor run;
wherein the cyclic movement of the conveyor run in this manner results in a generally steady movement of goods along the second portion of the conveyor run and into the adjustable gate; and
a fraction of the goods that are moved into the adjustable gate by operation of the differential impulse motor and that move through the adjustable gate onto the upstream portion of the conveyor run is determined by the position of the discharge opening in the rotatable sleeve of the adjustable gate.

15. The adjustable gate of claim 1, further comprising:
a second adjustable gate disposed within the conveyor run downstream from the first adjustable gate and secured within the downstream portion of the conveyor run; and
a second downstream portion of the conveyor run downstream from and secured to the second rotatable sleeve.

16. The adjustable gate of claim 1, further comprising:
a flange secured to the first portion of the tray;
the rotatable flange secured to the rotatable sleeve; and
a plurality of securing members for connecting the tray flange and the rotatable flange.

17. An adjustable gate for being coupled between a conveyor first portion and a conveyor second portion, comprising:
a cage having a first end flange and a second end flange and a plurality of load-transferring braces coupled therebetween;
a rotatable sleeve movably received within the cage to rotate about an axis of the cage and having a discharge opening along a portion of its circumference for selectively dropping goods from the rotatable sleeve;
a motor coupled to drive a worm gear to rotate the rotatable sleeve about the axis of the cage;
a first spring-biased plunger assembly disposed intermediate the rotatable sleeve and the conveyor first portion; and
a second spring-biased plunger assembly disposed intermediate the rotatable sleeve and the conveyor second portion.
